(19) Europäisches Patentamt
European Patent Office
Office européen des brevets

(11) **EP 3 969 839 B1**

(12) **EUROPÄISCHE PATENTSCHRIFT**

(45) Veröffentlichungstag und Bekanntmachung des Hinweises auf die Patenterteilung:
**14.02.2024 Patentblatt 2024/07**

(21) Anmeldenummer: **20735083.6**

(22) Anmeldetag: **16.06.2020**

(51) Internationale Patentklassifikation (IPC):
**G01B 7/26** (2006.01)  **G01B 7/02** (2006.01)
**G01V 3/16** (2006.01)  **G01V 3/08** (2006.01)
**G01V 3/10** (2006.01)  **F17D 5/00** (2006.01)

(52) Gemeinsame Patentklassifikation (CPC):
**G01B 7/26; G01V 3/081; G01V 3/104; G01V 3/16;**
B64U 10/13; B64U 2101/60; F17D 5/005;
G01B 7/023

(86) Internationale Anmeldenummer:
**PCT/EP2020/066622**

(87) Internationale Veröffentlichungsnummer:
**WO 2021/001145 (07.01.2021 Gazette 2021/01)**

(54) **BESTIMMUNG DES MITTLEREN ABSTANDES EINER MESSEINRICHTUNG ZU EINEM LEITER**

DETERMINING THE AVERAGE DISTANCE OF A MEASURING DEVICE TO A CONDUCTOR

DÉTERMINATION DE LA DISTANCE MOYENNE D'UN DISPOSITIF DE MESURE À UN CONDUCTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.07.2019 EP 19183605**

(43) Veröffentlichungstag der Anmeldung:
**23.03.2022 Patentblatt 2022/12**

(73) Patentinhaber: **Siemens Energy Global GmbH & Co. KG**
**81739 München (DE)**

(72) Erfinder:
• **WEISS, Roland**
**91058 Erlangen (DE)**
• **LIEPE, Mike**
**91334 Hemhofen (DE)**
• **WAKOLBINGER, Stefan**
**8010 Graz (AT)**

(56) Entgegenhaltungen:
EP-A1- 3 228 980   WO-A1-2014/163536
DE-A1- 19 846 428   RU-C1- 2 504 762
RU-C1- 2 510 500   RU-C1- 2 630 856
US-A1- 2018 172 866

• **SALEM A ET AL: "TILT-DEPTH METHOD: A SIMPLE DEPTH ESTIMATION METHOD USING FIRST-ORDER MAGNETIC DERIVATIVES", THE LEADING EDGE, SOCIETY OF EXPLORATION GEOPHYSICISTS, US, Bd. 26, Nr. 12, 1. Dezember 2007 (2007-12-01), Seiten 1502-1505, XP001508574, ISSN: 1070-485X, DOI: 10.1190/1.2821934**

**Beschreibung**

Gebiet der Erfindung

Die vorliegende Erfindung betrifft ein Verfahren zur Bestimmung des Abstandes einer Messeinrichtung zu einem Leiter. Außerdem gibt die Erfindung eine Messvorrichtung an. Die Erfindung kann insbesondere zur Bestimmung der Tiefe der Lage einer Pipeline unter der Erdoberfläche verwendet werden.

Beschreibung des Stands der Technik

Pipelines zum Transport von Öl und Gas sind kritische Versorgungsinfrastrukturen und müssen über tausende Kilometer hinweg überwacht werden. Der Großteil dieser Pipelines verläuft unterirdisch, typischerweise in einer Vergrabungstiefe von 1,5-3 Metern. Ein wichtiges Inspektionskriterium ist die regelmäßige Bestimmung der sog. Schichtdicke (engl. Depth-of-Cover) über der Pipeline. Diese ist definiert als Abstand der Pipelineoberkante zur Erdoberfläche und darf einen gewissen Schwellwert nicht unterschreiten, um den Schutz der Pipeline vor Wettereinflüssen (z.B. Unterspülung) oder menschlichen Aktivitäten (z.B. Landwirtschaft) zu gewährleisten. Die Schichtdicke über der Pipeline kann sich verändern, vor allem durch Erdbewegungen an der Oberfläche (z.B. Pflügen, Ausspülungen), oder aber auch in instabilen Untergründen wie Mooren oder Wüstensand.

Nachdem die Pipeline nach Vergrabung und Wiederaufschüttung nicht mehr einsehbar ist, ist die genaue Lage der Pipelineoberkante eine wichtige Voraussetzung für die Messung der Schichtdicke, da lediglich der Geländeverlauf über der Pipeline regelmäßig großflächig vermessen werden kann (z.B. durch LiDAR-Befliegungen). Die Differenzbildung aus Geländeoberfläche und Pipelineoberkante bestimmt dann die Schichtdicke. Als technisch naheliegend erscheint es, die Pipeline während der Verlegung hochgenau mit einem GNSS/RTK System zu vermessen. Gerade ältere Pipelinebestande wurden bei der Verlegung aber nicht oder nicht in ausreichender Genauigkeit erfasst. Teilweise liegen auch nur zweidimensionale Daten (geographische Länge und Breite) vor, allerdings nicht der Höhenwert.

Im Stand der Technik sind Methoden bekannt die Pipeline bzw. ihre metallische Struktur im Erdreich zu orten. Die meisten dieser Verfahren messen das, durch Einspeisung eines Stromes, erzeugte Magnetfeld und werden erdoberflächennah (Handmessgerate oder gefährtartige Systeme) angewandt, was die Übertragung des eingekoppelten Messsignals und somit die Sensitivität der Messung begünstigt. Eine Messung der Schichtdicke über tausende Kilometer hinweg ist allerdings aufgrund des manuellen Aufwandes nicht praktikabel.

Eine Alternative stellt das Bodenradar dar (engl. Ground Penetrating Radar). Hierfür muss kein Messsignal eingespeist werden, außerdem muss das Objekt nicht metallisch sein. Die entscheidenden Nachteile dieser Technologie sind einerseits die Abhängigkeit der Anwendbarkeit von der Bodenbeschaffenheit (z.B. Schwierigkeiten bei Feuchtigkeit im Boden) und andererseits die starke Reflexion des Signals an der Erdoberfläche, sobald man das System etwas vorn Grund entfernt. Dies ist aber für einen praktikablen Einsatz notwendig, da nur mit einem Fluggerat größere Distanzen in annehmbarer Zeit bewältigt werden können.

Ein anderes etabliertes Verfahren für die interne Inspektion von Pipelines ist der Einsatz von Geomolchen (engl. (smart/intelligent) Pigging). Der Molch wird in den Pipelineverlauf eingeführt und bewegt sich durch die Fließgeschwindigkeit des transportierten Mediums in der Pipeline fort. Die Bestimmung der Position erfolgt durch Inertialmesssysteme (IMU/ Odometrie). Solchen Systemen inhärent ist die Eigenschaft einer Drift der Messung, also einer Fehlerfortpflanzung durch die inkrementelle Vorschubbestimmung. Dieses Fehlerverhalten kann mangels des Kontaktes zur Außenwelt nicht trivialerweise durch externe und somit absolute Messungen kompensiert werden kann. Hierbei kommt als Aspekt die zumeist metallische Struktur der Pipeline zum Tragen, die die Übertragung von Funksignalen (elektrischen Feldern) stört (Faradayscher Käfig). Bekannt sind aus dem Stand der Technik an der Außenhaut der Pipeline angebrachte Ortungseinrichtungen (akustisch, magnetisch, Funktechnik etc.), die die Passage es Geomolchs detektieren und auch das Driftverhalten begrenzen können.

Diese Form von Sensorik ist aber gerade bei schlecht eingemessenen Altbestanden im Normalfall nicht vorhanden. Ein weiterer Nachteil ist neben dem Driftverhalten auch die Tatsache, dass gewisse Typen von Pipelines grundsätzlich nicht molchbar sind.

Vereinzelt sind aus dem Stand der Technik auch Ansätze/ Verfahren bekannt, welche die Lage unterirdischer Pipelines durch Befliegung mittels UAVs oder Helikoptern bestimmen. Dies ermöglicht eine effizientere Messung über lange Strecken hinweg als bei Verwendung von Handmessgeraten oder gefährtartigen Systemen. Einige Verfahren nutzen lediglich die emittierte Wärmestrahlung und arbeitet somit rein passiv. Bei der VLF (Very Low Frequency) Ortung wird das weltweite Netz der VLF-Kommunikationsstationen, welche im Frequenzbereich von 15kHz bis 30kHz senden genutzt. Trift die EM-Welle eines VLF Senders auf einen elektrischen Leitfähigkeitskontrast im Untergrund so andern sich Real- und Imaginärteil der normierten Hz-Komponente. Da ein metallischer Gegenstand der parallel zur Wellenfront der EM-Welle im Erdreich liegt, einen sehr großer Leitfähigkeitskontrast darstellt, kann ein vergleichsweise großer Messeffekt erzielt werden. Zur Verbesserung der Genauigkeit werden häufig die Signale mehrere Sender als Grundlage für die Ortung mittels der passiven VLF-Methode verwendet. Eine weitere Erhöhung der Genauigkeit kann durch die aktive VLF-Methode erreicht werden. Bei der aktiven VLF-Methode werden mobile VLF Sender errichtet, um definiertere und größere Signalpegel für die Auswertung nach der VLF-Methode zu erzeugen. Bei einigen Systemen kann die aktive und die passive VLF-Methode kombiniert werden. Wobei sich bei Versuchen alle auf der VLF Methode basierenden Verfahren als nicht genau genug bzw. nicht praktikabel genug erwiesen haben Auch sind Methoden bekannt, die das KKS-System (Kathodischer Korrosion Schutz) nutzen um Strome im Bereich zwischen 1kHz und 10kHz in die Pipeline einkoppeln, um im nachfolgenden, mit einer Spule die horizontale Komponente des Magnetfeldes des eingekoppelten Stromes zu messen. Die Tiefenabschatzung auf Basis der Halbwertsbreite der Messkurve ist jedoch nicht genau genug, um den Anforderungen der Pipeline-Betreiber in entwickelten Volkswirtschaften zu genügen.

Eine Messvorrichtung zur Bestimmung des mittleren Abstandes zwischen der Messvorrichtung und einem stromdurchflossenen Leiter ist beispielsweise in der US 2018/172866 A1 offenbart.

Ein Diagnosesystem wird in der RU 2 510 500 C1 und in der EP 3 228 980 offenbart.

In der Veröffentlichung "TILT-DEPTH METHOD: A SIMPLE DEPTH ESTIMATION METHOD USING FIRST-ORDER MAGNETIC DERIVATIVES", THE LEADING EDGE, SOCIETY OF EXPLORATION GEOPHYSICISTS, US, Bd. 26, Nr. 12, 1. Dezember 2007 (2007-12-01), Seiten 1502-1505, XP001508574, ISSN: 1070-485X, DOI: 10.1190/1.282193 wird ein Analyse- und Bestimmungsverfahren offenbart.

Weitere Verfahren sind in DE 198 46 428 A1, WO 2014/163536 A1, RU 2 504 762 C1 und RU 2 630 856 C1 offenbart.

## ZUSAMMENFASSUNG DER ERFINDUNG

Die Aufgabe der Erfindung besteht darin, eine alternative Lösung zur Messung der Lage einer Pipeline unter der Erdoberfläche anzugeben.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung.

Ein Aspekt der Erfindung besteht darin, dass das Verhältnis der Vertikalkomponente und der Horizontalkomponente einer, von einem elektrischen Strom eines Leiters erzeugten, magnetischen Flussdichte verwendet wird, um den Abstand des Leiters zu einer Messvorrichtung zu bestimmen.

Die Erfindung beansprucht ein Verfahren zur Bestimmung des mittleren Abstandes einer Messeinrichtung zu einem Leiter, wobei die Messeinrichtung ein Messsystem aufweist,
wobei der Leiter von einem elektrischen Strom durchflossen wird, wodurch ein Magnetfeld, aufweisend eine magnetische Flussdichte entsteht, wobei die magnetische Flussdichte eine Horizontalkomponente und eine Vertikalkomponente aufweist, mit den Schritten:

- eine Ermittlung von einem Verlauf der Horizontalkomponente über die Horizontalposition der Messeinrichtung,

   wobei die Horizontalposition den orthogonalen Abstand der Messeinrichtung zur Längsachse des Leiters parallel zur Erdoberfläche angibt,
   wobei der Verlauf der Horizontalkomponente durch Messung der Horizontalkomponenten an mindestens zwei unterschiedlichen Horizontalpositionen (z.B. durch Pendelflug der Messeinrichtung) durch das Messsystem der Messeinrichtung, welche die Horizontalposition ändert, ermittelt wird und

- eine Ermittlung eines zu dem ermittelten Verlauf der Horizontalkomponente zugehörigen Verlauf der Vertikalkomponente über die Horizontalposition der Messeinrichtung,
   wobei der Verlauf der Vertikalkomponente durch Messung der zu den ermittelten Horizontalkomponenten zugehörigen Vertikalkomponenten durch das Messsystem ermittelt wird,
- eine Bestimmung des Verhältnisses des Verlaufs der Vertikalkomponente zu dem Verlauf der Horizontalkomponente als Funktion über die Horizontalposition der Messeinrichtung,
- eine Bestimmung der Ableitung des Verhältnisses nach der Horizontalposition,
- eine Bestimmung des Kehrwertes der Ableitung und
- eine Bestimmung des mittleren Abstandes der Messeinrichtungen zu dem Leiter aus dem Kehrwert der Ableitung.

Aus dem mittleren Abstand der Messeinrichtung zum Leiter kann anschließend die Vertikalposition und Tiefe des Leiters unter der Erdoberfläche bestimmt werden.

Die Verwendung des Verhältnisses des Verlaufs der Vertikalkomponente zu dem Verlauf der Horizontalkomponente als Funktion über die Horizontalposition der Messeinrichtung hat den Vorteil, dass das Messergebnis unabhängig von der Stärke des anregenden Stroms wird. Das ist vorteilhaft, da die Stromstärke über die Messlänge variieren kann/ Stromstärkenverluste auftreten können.

Die Erfindung beansprucht außerdem ein Verfahren zur Bestimmung des mittleren Abstandes von mindestens zwei zueinander beabstandeten Messeinrichtungen (die Messvorrichtungen können dabei ortsfest sein) zu einem Leiter,

wobei jede Messeinrichtung ein Messsystem aufweist,
wobei der Leiter von einem elektrischen Strom durchflossen wird, wodurch ein Magnetfeld, aufweisend eine magnetische Flussdichte entsteht, wobei die magnetische Flussdichte eine Horizontalkomponente und eine Vertikalkomponente aufweist, mit den Schritten:

- eine Ermittlung von einem Verlauf der Horizontalkomponente über die Horizontalposition der Messeinrichtungen,

    wobei die Horizontalposition den orthogonalen Abstand der Messeinrichtung zur Längsachse des Leiters parallel zur Erdoberfläche angibt,
    wobei der Verlauf der Horizontalkomponente durch Messung der Horizontalkomponenten durch die Messsysteme der Messeinrichtungen, ermittelt wird,

- eine Ermittlung des zu dem ermittelten Verlauf der Horizontalkomponente zugehörigen Verlauf der Vertikalkomponente über die Horizontalposition der Messeinrichtungen,
    wobei der Verlauf der Vertikalkomponente durch Messung der zu den ermittelten Horizontalkomponenten zugehörigen Vertikalkomponenten durch die entsprechenden Messsysteme ermittelt wird,
- eine Bestimmung des Verhältnisses des Verlaufs der Vertikalkomponente zu dem Verlauf der Horizontalkomponente als Funktion über die Horizontalposition der Messeinrichtungen,
- eine Bestimmung der Ableitung des Verhältnisses nach der Horizontalposition,
- eine Bestimmung des Kehrwertes der Ableitung und
- eine Bestimmung des mittleren Abstandes der Messeinrichtungen zu dem Leiter aus dem Kehrwert der Ableitung.

Die Erfindung beansprucht außerdem ein Verfahren zur Bestimmung des mittleren Abstandes einer Messeinrichtung zu einem Leiter,

wobei die Messeinrichtung mindestens zwei Messsysteme aufweist, wobei die Messsysteme an unterschiedlichen vertikalen Positionen angeordnet sind,
wobei der Leiter von einem elektrischen Strom durchflossen wird, wodurch ein Magnetfeld, aufweisend eine magnetische Flussdichte entsteht, wobei die magnetische Flussdichte eine Horizontalkomponente und eine Vertikalkomponente aufweist, mit den Schritten:

- eine Ermittlung von Verläufen der Horizontalkomponente über die Horizontalposition der Messsysteme,

    wobei die Horizontalposition den orthogonalen Abstand der Messeinrichtung zur Längsachse des Leiters parallel zur Erdoberfläche angibt,
    wobei die Verläufe der Horizontalkomponente durch Messung der Horizontalkomponenten an mindestens zwei unterschiedlichen Horizontalpositionen (z.B. durch Pendelflug der Messeinrichtung) durch die Messsysteme der Messeinrichtung, welche die Horizontalposition ändert, ermittelt werden und

- eine Ermittlung der zu den ermittelten Verläufen der Horizontalkomponente zugehörigen Verläufe der Vertikalkomponenten über die Horizontalposition der Messeinrichtung,
    wobei die Verläufe der Vertikalkomponenten durch Messung der zu den ermittelten Horizontalkomponenten zugehörigen Vertikalkomponenten durch die entsprechenden Messsysteme ermittelt werden,
- eine Bestimmung der Verhältnisse der Verläufe der Vertikalkomponente zu den Verläufen der Horizontalkomponente als Funktion über die Horizontalposition der Messeinrichtung,
- eine Bestimmung der Ableitungen der Verhältnisse nach der Horizontalposition,
- eine Bestimmung der Kehrwerte der Ableitungen und
- eine Bestimmung des mittleren Abstandes der Messeinrichtungen zu dem Leiter aus den Kehrwerten der Ableitungen.

Die Erfindung beansprucht außerdem ein Verfahren zur Bestimmung des mittleren Abstandes von mindestens zwei zueinander beabstandten Messeinrichtungen (die Messvorrichtungen können ortsfest sein) zu einem Leiter,

wobei jede Messeinrichtung eine gleiche Anzahl von mindestens zwei Messsystemen aufweist, wobei die Messysteme derselben Messeinrichtung an unterschiedlichen vertikalen Positionen angeordnet sind,
wobei der Leiter von einem elektrischen Strom durchflossen wird, wodurch ein Magnetfeld, aufweisend eine magnetische Flussdichte entsteht, wobei die magnetische Flussdichte eine Horizontalkomponente und eine Vertikalkomponente aufweist, mit den Schritten:

- eine Ermittlung von Verläufen der Horizontalkomponente über die Horizontalpositionen durch bezüglich der vertikalen Position korrespondierenden Messsysteme,

  wobei die Horizontalposition den orthogonalen Abstand der Messeinrichtung zur Längsachse des Leiters parallel zur Erdoberfläche angibt,
  wobei die Verläufe der Horizontalkomponente durch Messung der Horizontalkomponenten durch die Messsysteme der Messeinrichtungen ermittelt werden und

- eine Ermittlung der zu den ermittelten Verläufen der Horizontalkomponente zugehörigen Verläufen der Vertikalkomponenten über die Horizontalposition der Messeinrichtungen,
  wobei die Verläufe der Vertikalkomponenten durch Messung der zu den ermittelten Horizontalkomponenten zugehörigen Vertikalkomponenten durch die entsprechenden Messsysteme ermittelt werden,
- eine Bestimmung der Verhältnisse der Verläufe der Vertikalkomponente zu den Verläufen der Horizontalkomponente als Funktion über die Horizontalposition der Messeinrichtung,
- eine Bestimmung der Ableitungen der Verhältnisse nach den Horizontalpositionen,
- eine Bestimmung der Kehrwerte der Ableitungen und
- eine Bestimmung des mittleren Abstandes der Messeinrichtungen zu dem Leiter aus den Kehrwerten der Ableitungen.

Dabei sind die Messsysteme unterschiedlicher Messeinrichtungen in gleichen vertikalen Positionen/ Höhe relativ zur Erdoberfläche angeordnet sind bzw. die Messeinrichtungen weisen zueinander korrespondierende Messsysteme auf.

In einer weiteren Ausgestaltung können zur Bestimmung des mittleren Abstandes der Messeinrichtungen zu dem Leiter aus den Kehrwerten der Ableitungen Ausgleichsgeraden zur Berücksichtigung der unterschiedlichen vertikalen Positionen der Messsysteme aufgestellt und einbezogen werden. Dies hat den Vorteil, dass der Einfluss äußerer Störungen auf die Positionsbestimmung der Pipeline minimiert werden kann.

In einer weiteren Ausgestaltung kann jedes Messsystem drei Spule aufweisen, wobei die Spulen orthogonal zueinanderstehen. Für die Vertikalkomponente (z-Richtung) kann eine Spule in vertikaler Richtung verwendet werden. Für die horizontale Komponente müssen im Allgemeinen zwei Spulen eine in x-Richtung und eine in y-Richtung genutzt werden. Bei Gleichstrom werden Alternativen zu Spulen z. B. MR-Sensoren zur Messung verwendet.

In einer weiteren Ausgestaltung kann, die von dem Magnetfeld in den Spulen erzeugte Induktionsspannung gefiltert wird.

In einer weiteren Ausgestaltung kann zur Filterung ein Bandpassfilter verwendet wird, wobei der Bandpassfilter abhängig von der Frequenz des Stroms des stromdurchflossenen Leiters angepasst wird.

In einer weiteren Ausgestaltung kann der Leiter Teil einer Pipeline zum Transport von Öl und/ oder Gas sein.

In einer weiteren Ausgestaltung kann der Leiter Teil eines kathodischen Korrosionsschutzsystems einer Pipeline sein.

In einer weiteren Ausgestaltung kann der elektrische Strom, von dem der Leiter durchflossen wird, einen Frequenzbereich von 30 Hz bis 2 kHz aufweisen.

In einer weiteren Ausgestaltung kann der elektrische Strom, von dem der Leiter durchflossen wird, eine sinusförmige Charakteristik aufweisen.

In einer weiteren Ausgestaltung kann die Messeinrichtung von einem bemannten oder unbemannten Flugobjekt/ Luftfahrzeug transportiert werden.

Die Erfindung beansprucht außerdem eine Messvorrichtung zur Bestimmung des mittleren Abstandes zwischen der Messvorrichtung und eines stromdurchflossenen Leiters, wobei die Messvorrichtung dazu eingerichtet ist in oder an einem Luftfahrzeug angeordnet zu werden, aufweisend:

- mindestens zwei zueinander vertikal angeordnete Messsysteme, wobei jedes Messsystem drei Spulen aufweist, wobei die Spulen orthogonal zueinanderstehen, wobei die Messvorrichtung ausgebildet und programmiert ist, ein erfindungsgemäßes Verfahren auszuführen.

Aus der Erfindung ergeben sich die folgenden Vorteile:

- Die Bestimmung des mittleren Abstandes der Messeinrichtung zum Leiter (und daraus die Position und Tiefe des Leiters unter der Erdoberfläche) ist unabhängig von der Amplitude des eingespeisten Stromes, da relativ und nicht absolut gemessen wird. Dadurch ist die Messung unabhängig von Ableitströmen des Leiters/ Pipeline gegen die Erde.

- Die Bestimmung des mittleren Abstandes der Messeinrichtung zum Leiter (und daraus die Position und Tiefe des Leiters unter der Erdoberfläche) ist zunächst unabhängig von der Frequenz des eingespeisten Stromes da keine absolute Messung der magnetischen Felder notwendig ist. Mit der Einschränkung das ein möglicherweise eingesetzter Filter am Eingang auf die Frequenz abgestimmt sein muss. Bei gleicher Einstellung des Filters und eines Verstärkers für ein Messsystem (z.B. ein Spulensystem) führt eine Abweichung der Frequenz zu keinem Fehler.

- Eine Drift der Nominalverstärkung über die Temperatur führt zu keinem Fehler bei der Bestimmung des mittleren Abstandes der Messeinrichtung zum Leiter (und daraus die Position und Tiefe des Leiters unter der Erdoberfläche) solange alle Messkanale eines Messsystems (z.B. eines Spulensystems) gleichmäßig driften.

- Der Einfluss von Störungen durch weitere Quellen im gleichen Frequenzband auf die Bestimmung der Tiefe des Leiters unter der Erdoberfläche ist vergleichsweise klein.

KURZE BESCHREIBUNG DER ZEICHNUNGEN

Die Besonderheiten und Vorteile der Erfindung werden aus den nachfolgenden Erläuterungen mehrerer Ausführungsbeispiele anhand von schematischen Zeichnungen ersichtlich.
Es zeigen

Fig. 1     ein Ablaufdiagramm des erfindungsgemäßen Verfahrens,

Fig. 2     eine schematische Darstellung des Leiters, des Magnetfeldes und des Koordinatensystems,

Fig. 3     einen Verlauf der Horizontal- und der Vertikalkomponente der magnetischen Flussdichte über die Horizontalposition der Messvorrichtung,

Fig. 4     einen Verlauf der Horizontal- und der Vertikalkomponente der magnetischen Flussdichte über die Horizontalposition der Messvorrichtung unter Annahme einer Störung durch einen parallelen zweiten Leiter mit großem Abstand,

Fig. 5     einen Verlauf des Verhältnisses von Vertikalkomponente zu Horizontalkomponente der magnetischen Flussdichte über die Horizontalposition der Messvorrichtung,

Fig. 6     ein Spulensystem zur Messung der Horizontalkomponente und der Vertikalkomponente der magnetischen Flussdichte,

Fig. 7     ein Verlauf des Verhältnisses von Vertikalkomponente zu Horizontalkomponente der magnetischen Flussdichte über die Horizontalposition des Messsystems unter Annahme einer Störung durch einen zweiten parallelen Leiter mit großem Abstand,

Fig. 8     ein Verlauf wie in Fig. 7 bei feinerer Auflösung,

Fig. 9     einen Verlauf des Abstandes der Messvorrichtung zu dem Leiter in Abhängigkeit von der Position der einzelnen Messsysteme (unter Annahme einer Störung durch einen parallelen zweiten Leiter mit großem Abstand) und

Fig. 10    eine schematische Darstellung der Messeinrichtung bestehend aus drei Spulensystemen (Messsystemen).

DETAILLIERTE BESCHREIBUNG DER ERFINDUNG

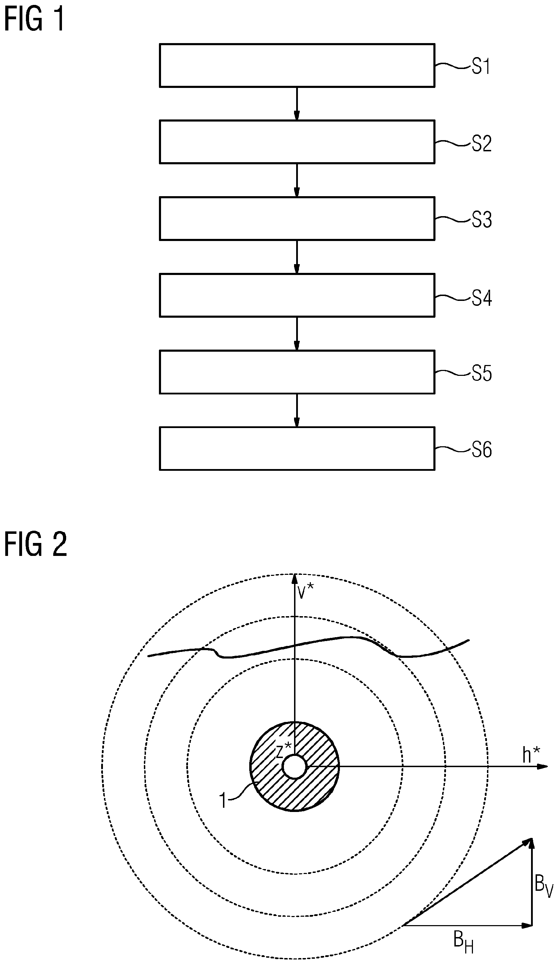

Fig. 1 zeigt ein Ablaufdiagramm der Schritte S1 - S6 des erfindungsgemäßen Verfahrens zur Bestimmung des mittleren Abstandes einer Messeinrichtung zu einem Leiter, wobei die Messeinrichtung ein Messsystem aufweist, wobei der Leiter von einem elektrischen Strom durchflossen wird, wodurch ein Magnetfeld, aufweisend eine magnetische Flussdichte entsteht, wobei die magnetische Flussdichte eine Horizontalkomponente und eine Vertikalkomponente aufweist.

Die Schritte des Verfahrens sind im Einzelnen:

- Verfahrensschritt S1: eine Ermittlung von einem Verlauf der Horizontalkomponente über die Horizontalposition der Messeinrichtung,

  wobei die Horizontalposition den orthogonalen Abstand der Messeinrichtung zur Längsachse des Leiters parallel zur Erdoberfläche angibt,
  wobei der Verlauf der Horizontalkomponente durch Messung der Horizontalkomponenten an mindestens zwei unterschiedlichen Horizontalpositionen durch das Messsystem der Messeinrichtung, welche die Horizontalposition ändert, ermittelt wird und

- Verfahrensschritt S2: eine Ermittlung eines zu dem ermittelten Verlauf der Horizontalkomponente zugehörigen Verlauf der Vertikalkomponente über die Horizontalposition der Messeinrichtung,
  wobei der Verlauf der Vertikalkomponente durch Messung der zu den ermittelten Horizontalkomponenten zugehörigen Vertikalkomponenten durch das Messsystem ermittelt wird,
- Verfahrensschritt S3: eine Bestimmung des Verhältnisses des Verlaufs der Vertikalkomponente zu dem Verlauf der Horizontalkomponente als Funktion über die Horizontalposition der Messeinrichtung,
- Verfahrensschritt S4: eine Bestimmung der Ableitung des Verhältnisses nach der Horizontalposition,
- Verfahrensschritt S5: eine Bestimmung des Kehrwertes der Ableitung und
- Verfahrensschritt S6: eine Bestimmung des mittleren Abstandes der Messeinrichtungen zu dem Leiter aus dem Kehrwert der Ableitung.

Es sind Erweiterungen des Verfahrens mit mehreren Messeinrichtungen (in diesem Fall können die Messeinrichtungen immobil sein) und Erweiterungen mit mehreren Messsystemen an der/den Messeinrichtung(en) möglich. Mehrere Messsysteme haben den Vorteil, dass Messstörungen ausgeglichen werden können.

Ein Aspekt der Erfindung besteht darin ein Verfahren zur Ermittlung des Abstandes zwischen einer Messeinrichtung und einem von einem elektrischen Strom durchflossen Leiter (z.B. als Teil einer Pipeline) anzugeben. Zur Erfassung des Abstandes einer von einem AC-Strom durchflossenen Pipeline oder eines Leiters ist eine Messung der Horizontal- und der Vertikalkomponente der magnetischen Feldstärke bzw. der magnetischen Flussdichte erforderlich.

Für die Vertikalkomponente (v*-Koordinatenachse) kann eine Spule in vertikaler Richtung verwendet werden. Für die Horizontalkomponente müssen im Allgemeinen zwei Spulen eine in h*-Koordinatenachse und eine in z*-Koordinatenachse genutzt werden.

Fig. 2 zeigt eine schematische Darstellung des Leiters 1, des Magnetfeldes (Horizontalkomponente magnetische Flussdichte $B_H$ und Vertikalkomponente magnetische Flussdichte $B_V$) und des Koordinatensystems (h*-, v*- und z*-Koordinatenachse).

$$(1) \qquad \vec{B}_H = \vec{B}_X + \vec{B}_Y \qquad B_H = \sqrt{B_X^2 + B_Y^2}$$

Wenn sich keine ferromagnetischen Stoffe im Umfeld des Leiters/ Pipeline befinden - die Pipeline selbst darf gleichmäßig ferromagnetisch sein, muss es jedoch nicht - dann kann das vom Strom in der Pipeline erzeugte Magnetfeld im Umfeld einer langen relativ geraden Pipeline wie folgt berechnet werden:

$$(2) \qquad B_H = \frac{\mu_0 \cdot I}{2\pi} \cdot \frac{-v}{(v^2 + h^2)} \qquad B_V = \frac{\mu_0 \cdot I}{2\pi} \cdot \frac{h}{(v^2 + h^2)}$$

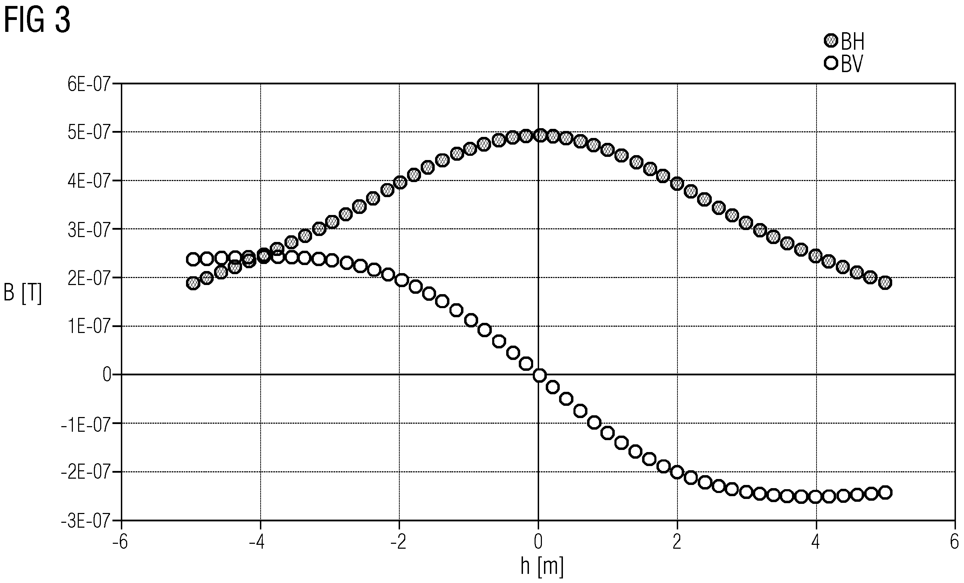

Dabei ist h die Horizontalposition auf der h-Koordinatenachse und v die Vertikalposition auf der v-Koordinatenachse des Messsystems (Spulensystem) relativ zur Pipeline und I die Stromstärke. Der Verlauf der Horizontal- $B_H$ und der Vertikalkomponente $B_V$ der magnetischen Flussdichte B in Tesla T über die Horizontalposition h in Metern m des Messsystems der Messvorrichtung ist in Fig. 3 dargestellt.

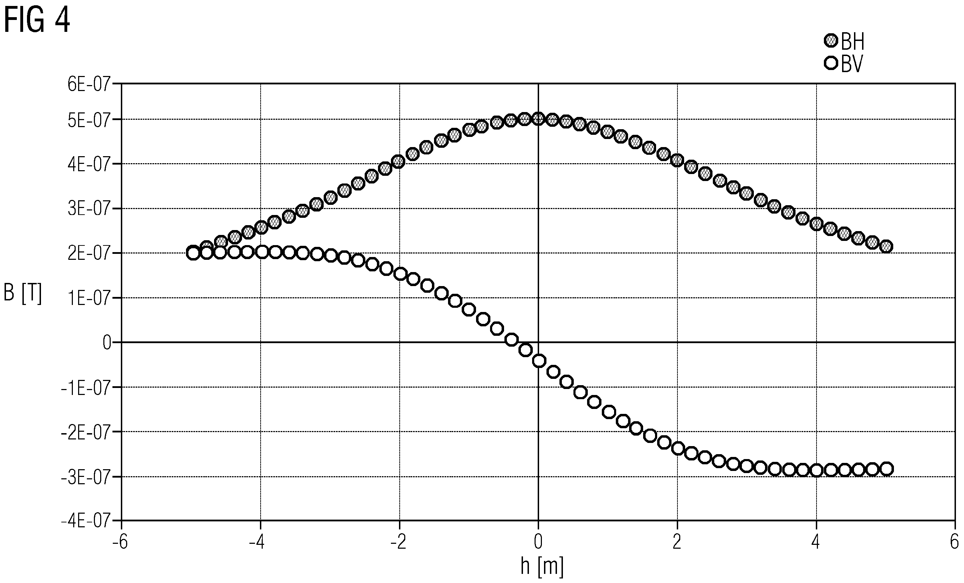

In Figur 4 ist der Verlauf der Horizontal- $B_H$ und der Vertikalkomponente $B_V$ der magnetischen Flussdichte über die Horizontalposition des Messsystems der Messvorrichtung unter Annahme einer Störung durch einen parallelen zweiten Leiter mit großem Abstand dargestellt.

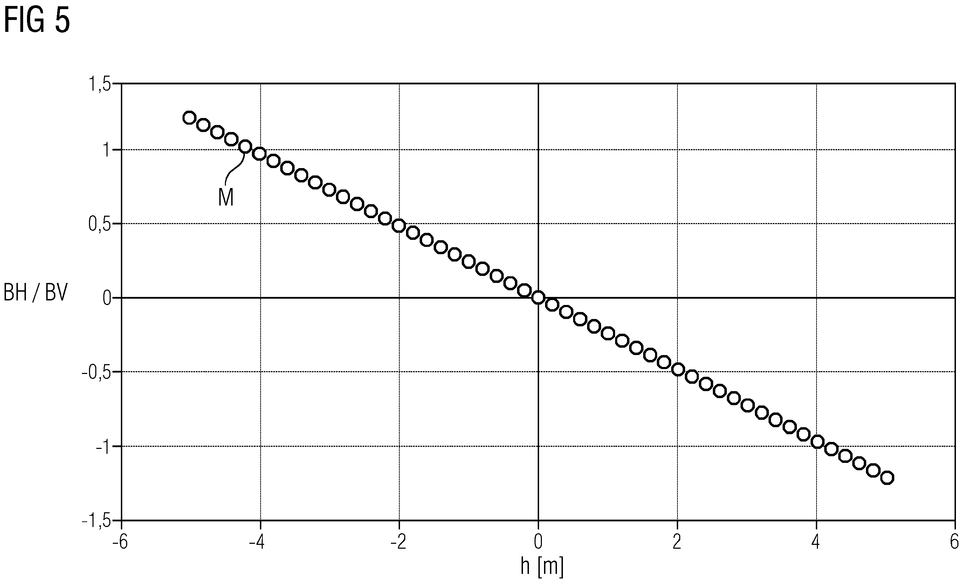

Durch Bildung des Verhältnisses M von der Vertikalkomponente $B_V$ zu der Horizontalkomponente $B_H$ (dargestellt in Fig. 5) wird das Messergebnis unabhängig von der Stärke des anregenden Stromes I, so dass Änderungen des Stromes I über die Länge der Pipeline z.B. durch Ableitströme usw. oder über die Zeit durch Drift der einspeisenden Stromquelle keine Rolle mehr spielen.

$$(3) \qquad \qquad M = \frac{B_V}{B_H} = \frac{-h}{v}$$

Wird nun die Messung der Horizontal- $B_H$ und der Vertikalkomponente $B_V$ (z.B. durch ein Unmanned aerial vehicle (UAV)) an verschiedenen Horizontalpositionen h (z.B. durch eine Bewegung horizontal über den Leiter/ die Pipeline) vorgenommen, kann die Vertikalposition v der Messvorrichtung/ des Messsystems über der Pipeline (und damit die Tiefe der Pipeline) durch Ableitung des Verhältnisses M nach der Vertikalposition v (Gradienten von M) relativ exakt berechnet werden. Die Tiefe des Mittelpunktes der Pipeline ist der Kehrwert der Ableitung.

Die Nullstelle des abgeleiteten invertiertem Verhältnisses M gibt die Vertikalposition v der Pipeline wieder.

$$(4) \qquad \qquad \left(\frac{\partial M}{\partial h}\right)_{M=0;h=0}^{-1} = v_{Pipeline}$$

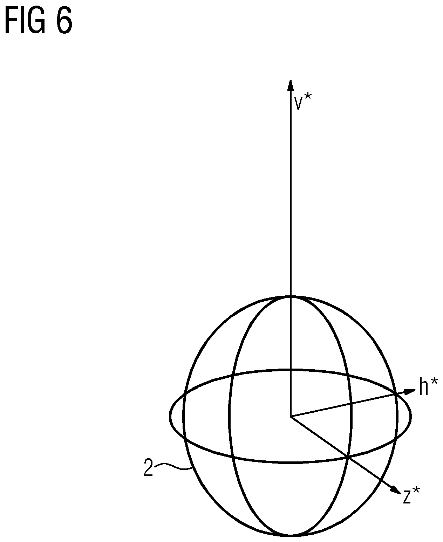

In Fig. 6 ist ein dreiachsiges Messsystem 2 in Form eines Spulensystems aus drei Spulen zur Messung der Horizontalkomponente $B_H$ der magnetischen Flussdichte, welche aus der h*- und der z*-Koordinate berechnet wird und der Vertikalkomponente $B_V$, welche bei günstiger Ausrichtung des Messsystems 2 der v*- Koordinate entspricht, exemplarisch dargestellt.

Die vom sich zeitlich änderten Magnetfeld in den Spulen erzeugte Induktionsspannung kann mit einem Bandpassfilter, der auf die Frequenz des über das KKS-System eingespeisten Stromes eingestellt ist, schmalbandig gefiltert, verstärkt und digitalisiert werden.

Wird ein zweites oder drittes gleichartiges Spulensystem z.B. vom UAV gleichzeitig - jedoch mit einer anderen definierten Vertikalposition v über die Pipeline/ den Leiter - geführt, kann wie folgt der Einfluss äußerer Störungen auf die Positionsbestimmung der Pipeline minimiert werden:

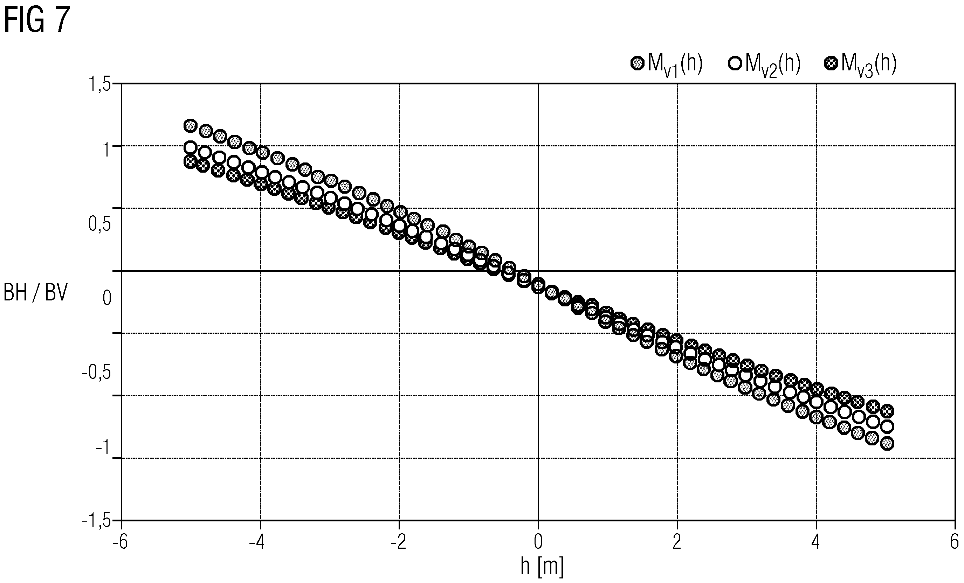

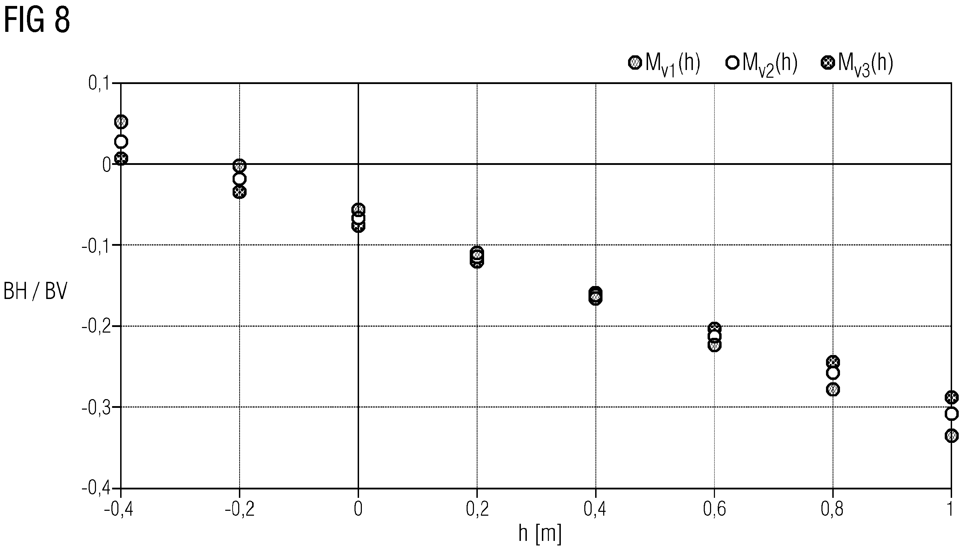

Es gibt nun z.B. drei Verhältnisse der Vertikal- und der Horizontalkomponenten $M_{V1}$ (h), $M_{V2}$ (h) $M_{V3}$ (h) (siehe Fig. 7 und 8) . Diese werden über die Horizontalposition h der Messvorrichtung betrachtet. Bei äußeren Störungen ändert sich der Verlauf des Verhältnisses M (Fig. 5 ungestört). Am Schnittpunkt $h_s$ (Gleichung (5)) der Verhältnisse $M_{V1}$(h), $M_{V2}$(h) $M_{V3}$(h) - dieser sollte wieder in der Nähe des Nulldurchganges sein - werden wieder die Ableitungen nach der horizontalen Position h gebildet.

$$(5) \qquad \qquad M_{V1}(h_s) = M_{V2}(h_s) = M_{V3}(h_s)$$

Dies kann durch die Berechnung einer lokalen Ausgleichsgeraden (Fitgeraden bzw. Moor Penrose Inversion) erfolgen. Für jedes Messsystem 2 ergibt sich nun ein anderer Wert, da jede Messsystems 2 eine andere Vertikalposition v aufweist.

$$(6) \qquad \qquad \left(\frac{\partial M_{V1}}{\partial h}\right)_{h_s \; mit \; M_{V1}(h_s)=M_{V2}(h_s)=M_{V3}(h_s)}^{-1} = v1_{Pipeline}$$

$$(7) \qquad \qquad \left(\frac{\partial M_{V2}}{\partial h}\right)_{h_s \; mit \; M_{V1}(h_s)=M_{V2}(h_s)=M_{V3}(h_s)}^{-1} = v2_{Pipeline}$$

$$(8) \qquad \qquad \left(\frac{\partial M_{V3}}{\partial h}\right)_{h_s \; mit \; M_{V1}(h_s)=M_{V2}(h_s)=M_{V3}(h_s)}^{-1} = v3_{Pipeline}$$

Die zugehörigen Ausgleichsgeraden haben die Form:

$$(9) \qquad \qquad M_{V1}(h) = \frac{h}{v1} + m_{0\,v1}$$

$$(10) \qquad M_{V2}(h) = \frac{h}{v2} + m_{0\ v2}$$

$$(11) \qquad M_{V3}(h) = \frac{h}{v1} + m_{0\ v3}$$

Die Horizontalposition h der Pipeline kann wie folgt aus den berechneten Werten ermittelt werden.

$$(12) \qquad h_{\text{Pipeline}} = \frac{1}{6}(v_1 \cdot m_{0\ V1} + v_2 \cdot m_{0\ V2} + v_3 \cdot m_{0\ V3}) + \frac{1}{2}h_s$$

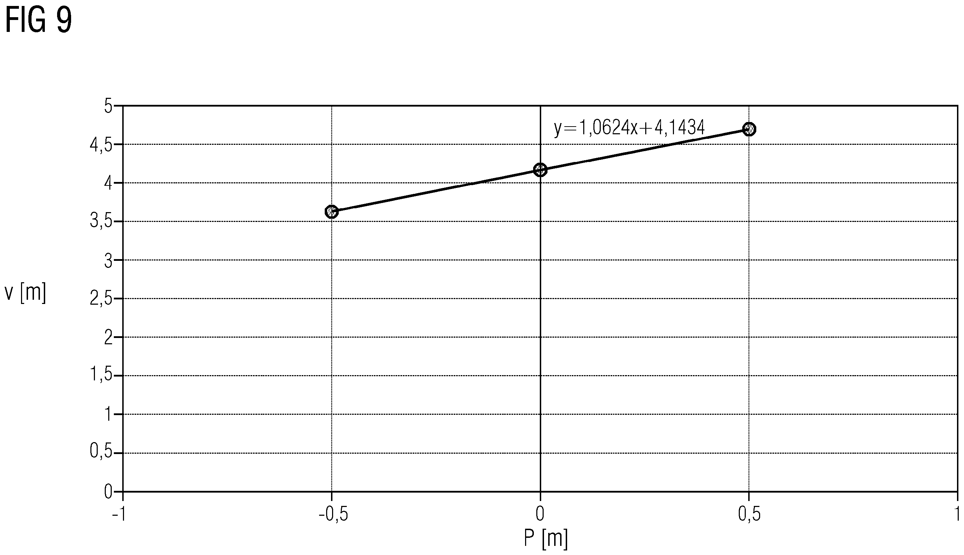

Da der relative Abstand der Messsysteme 2 zueinander bekannt ist (z.B. -1 m, 0 m und 1 m) können die ermittelten Abstände der Pipeline/des Leiters zu den einzelnen Messsysteme 2 über deren Position in der Messvorrichtung, wie in Fig. 9 dargestellt, aufgetragen werden.

Fig. 9 zeigt einen Verlauf der Tiefe T des Leiters (Relativabstände v1 v2 und v3)) in Abhängigkeit von der Position P in Metern m der einzelnen Messsysteme 2 der Messvorrichtung (unter Annahme einer Störung durch einen parallelen zweiten Leiter mit großem Abstand). Bei dem hier beschriebenen Vorgehen unter Verwendung mehrerer Messsystem (Spulensystem) entspricht T dem vertikalen Abstand zwischen der mittleren Messvorrichtung und dem Mittelpunkt des Leiters/ der Pipeline. Es ist damit die Vertikalposition v der Messvorrichtung in der Mitte der Messvorrichtungen (bei mehreren Messsystemen).

Anschließend wird eine Ausgleichsgerade der Form:

$$(13) \qquad \gamma = a \cdot x + b$$

gebildet.

Durch die drei ermittelten Relativabstände v1 v2 und v3 gelegt. Die Tiefe T des Leiters/ der Pipeline in dem Relativkoordinatensystem der Messvorrichtung kann dann wie folgt berechnet werden:

$$(14) \qquad T = \frac{b}{2} \cdot \left(1 + \frac{1}{a}\right)$$

bzw. alternativ:

$$(15) \qquad T = \frac{b}{3} \cdot \left(2 + \frac{1}{a}\right)$$

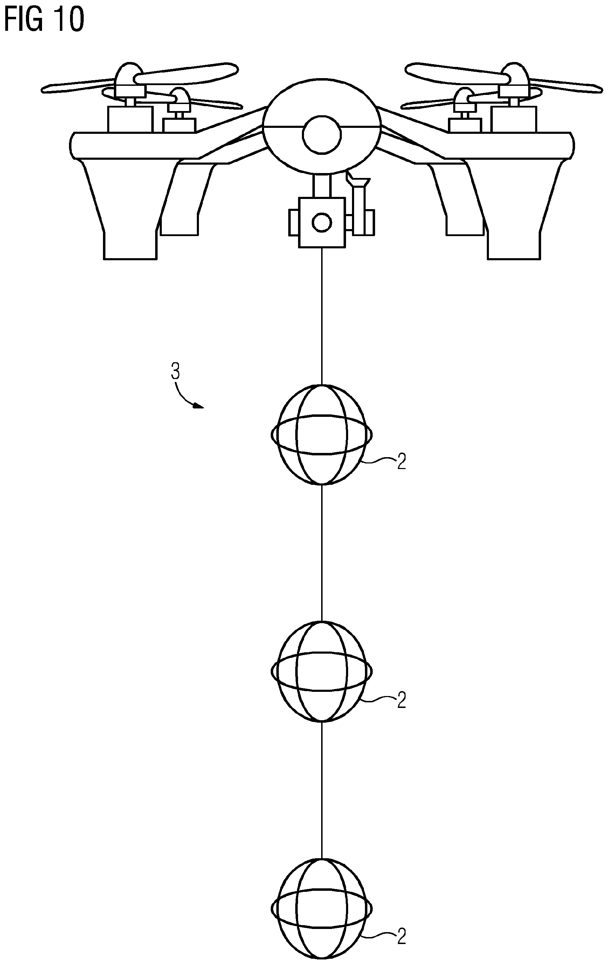

Eine schematische Darstellung der Messeinrichtung 3 bestehend aus z.B. drei Messsystemen 2 (Spulensystemen) ist in Fig. 10 dargestellt.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen, welcher allerdings durch die Gegenstände der anhängigen Ansprüche begrenzt ist.

Bezugszeichenliste

1    Leiter
2    Messsystem
3    Messeinrichtung

$B_H$    Horizontalkomponente magnetische Flussdichte
$B_V$    Vertikalkomponente magnetische Flussdichte

| | |
|---|---|
| B[T] | magnetische Flussdichte in Tesla |
| h | Horizontalposition relativ zum Leiter |
| $h_s$ | Schnittpunkt |
| h[m] | Horizontalposition in Metern |
| h* | h-Koordinatenachse |
| I | Stromstärke |
| M | Verhältnis von $B_V$ zu $B_H$ |
| $M_{vi}(h)$ | Verhältnis von $B_V$ zu $B_H$ bei mehreren Messsystemen mit i = [1; ∞ [ |
| Si | Verfahrensschritt Si mit i = [1; 6] |
| T | Tiefe des Leiters / mittlere Vertikalposition v |
| P[m] | Position des Messsystems in Messvorrichtung in Metern |
| v | Vertikalposition relativ zum Leiter |
| vi | Relativabstände mit i = [1; ∞[ |
| v* | v-Koordinatenachse |
| z* | z-Koordinatenachse |

**Patentansprüche**

1. Verfahren zur Bestimmung des mittleren Abstandes (v) einer Messeinrichtung (3) zu einem Leiter (1),

   wobei die Messeinrichtung (3) ein Messsystem (2) aufweist, wobei der Leiter (1) von einem elektrischen Strom durchflossen wird, wodurch ein Magnetfeld, aufweisend eine magnetische Flussdichte (B[T]) entsteht, wobei die magnetische Flussdichte (B[T]) eine Horizontalkomponente ($B_H$) und eine Vertikalkomponente ($B_V$) aufweist, mit den Schritten:

   - eine Ermittlung (S1) von einem Verlauf der Horizontalkomponente ($B_H$) über die Horizontalposition (h[m]) der Messeinrichtung (3),

     wobei die Horizontalposition (h[m]) den orthogonalen Abstand der Messeinrichtung (3) zur Längsachse des Leiters (1) parallel zur Erdoberfläche angibt,
     wobei der Verlauf der Horizontalkomponente ($B_H$) durch Messung der Horizontalkomponenten ($B_H$) an mindestens zwei unterschiedlichen Horizontalpositionen (h[m]) durch das Messsystem (2) der Messeinrichtung (3), welche die Horizontalposition (h[m]) ändert, ermittelt wird und

   - eine Ermittlung (S2) eines zu dem ermittelten Verlauf der Horizontalkomponente ($B_H$) zugehörigen Verlauf der Vertikalkomponente ($B_V$) über die Horizontalposition (h[m]) der Messeinrichtung (3),
     wobei der Verlauf der Vertikalkomponente ($B_V$) durch Messung der zu den ermittelten Horizontalkomponenten ($B_H$) zugehörigen Vertikalkomponenten ($B_V$) durch das Messsystem (2) ermittelt wird,
     - eine Bestimmung (S3) des Verhältnisses (M) des Verlaufs der Vertikalkomponente ($B_V$) zu dem Verlauf der Horizontalkomponente ($B_H$) als Funktion über die Horizontalposition (h[m]) der Messeinrichtung (3),
     - eine Bestimmung (S4) der Ableitung des Verhältnisses (M) nach der Horizontalposition,
     - eine Bestimmung (S5) des Kehrwertes der Ableitung und
     - eine Bestimmung (S6) des mittleren Abstandes (v) der Messeinrichtungen (3) zu dem Leiter (1) aus dem Kehrwert der Ableitung.

2. Verfahren zur Bestimmung des mittleren Abstandes (v) von mindestens zwei zueinander beabstandeten Messeinrichtungen (3) zu einem Leiter (1),

   wobei jede Messeinrichtung (3) ein Messsystem (2) aufweist, wobei der Leiter (1) von einem elektrischen Strom durchflossen wird, wodurch ein Magnetfeld, aufweisend eine magnetische Flussdichte (B[T]) entsteht, wobei die magnetische Flussdichte (B[T]) eine Horizontalkomponente ($B_H$) und eine Vertikalkomponente ($B_V$) aufweist, mit den Schritten:

   - eine Ermittlung (S1) von einem Verlauf der Horizontalkomponente ($B_H$) über die Horizontalposition (h[m]) der Messeinrichtungen (3),

     wobei die Horizontalposition (h[m]) den orthogonalen Abstand der Messeinrichtung (3) zur Längsachse des Leiters (1) parallel zur Erdoberfläche angibt,
wobei der Verlauf der Horizontalkomponente ($B_H$) durch Messung der Horizontalkomponenten ($B_H$) durch die Messsysteme (2) der Messeinrichtungen (3), ermittelt wird,

- eine Ermittlung (S2) des zu dem ermittelten Verlauf der Horizontalkomponente ($B_H$) zugehörigen Verlauf der Vertikalkomponente ($B_V$) über die Horizontalposition (h[m]) der Messeinrichtungen (3),
wobei der Verlauf der Vertikalkomponente ($B_V$) durch Messung der zu den ermittelten Horizontalkomponenten ($B_H$) zugehörigen Vertikalkomponenten ($B_V$) durch die entsprechenden Messsysteme (2) ermittelt wird,
- eine Bestimmung (S3) des Verhältnisses (M) des Verlaufs der Vertikalkomponente ($B_V$) zu dem Verlauf der Horizontalkomponente ($B_H$) als Funktion über die Horizontalposition (h[m]) der Messeinrichtungen (3),
- eine Bestimmung (S4) der Ableitung des Verhältnisses (M) nach der Horizontalposition (h[m]),
- eine Bestimmung (S5) des Kehrwertes der Ableitung und
- eine Bestimmung (S6) des mittleren Abstandes (v) der Messeinrichtungen zu dem Leiter aus dem Kehrwert der Ableitung.

3. Verfahren zur Bestimmung des mittleren Abstandes (v) einer Messeinrichtung (3) zu einem Leiter (1),

wobei die Messeinrichtung (3) mindestens zwei Messsysteme (2) aufweist, wobei die Messysteme (2) an unterschiedlichen vertikalen Positionen (P[m]) angeordnet sind,
wobei der Leiter (1) von einem elektrischen Strom durchflossen wird, wodurch ein Magnetfeld, aufweisend eine magnetische Flussdichte (B[T]) entsteht, wobei die magnetische Flussdichte (B[T]) eine Horizontalkomponente ($B_H$) und eine Vertikalkomponente ($B_V$) aufweist,
mit den Schritten:

- eine Ermittlung (S1) von Verläufen der Horizontalkomponente ($B_H$) über die Horizontalposition (h[m]) der Messsysteme (2),

wobei die Horizontalposition (h[m]) den orthogonalen Abstand der Messeinrichtung (3) zur Längsachse des Leiters (1) parallel zur Erdoberfläche angibt,
wobei die Verläufe der Horizontalkomponente ($B_H$) durch Messung der Horizontalkomponenten ($B_H$) an mindestens zwei unterschiedlichen Horizontalpositionen (h[m]) durch die Messsysteme (2) der Messeinrichtung (3), welche die Horizontalposition (h[m]) ändert, ermittelt werden und

- eine Ermittlung (S2) der zu den ermittelten Verläufen der Horizontalkomponente ($B_H$) zugehörigen Verläufe der Vertikalkomponenten ($B_V$) über die Horizontalposition (h[m]) der Messeinrichtung (3),
wobei die Verläufe der Vertikalkomponenten ($B_V$) durch Messung der zu den ermittelten Horizontalkomponenten ($B_H$) zugehörigen Vertikalkomponenten ($B_V$) durch die entsprechenden Messsysteme (2) ermittelt werden,
- eine Bestimmung (S3) der Verhältnisse (M) der Verläufe der Vertikalkomponente ($B_V$) zu den Verläufen der Horizontalkomponente als Funktion über die Horizontalposition ($B_H$) der Messeinrichtung (3),
- eine Bestimmung (S4) der Ableitungen der Verhältnisse (M) nach der Horizontalposition (h[m]),
- eine Bestimmung (S5) der Kehrwerte der Ableitungen und
- eine Bestimmung (S6) des mittleren Abstandes (T) der Messeinrichtungen (3) zu dem Leiter (1) aus den Kehrwerten der Ableitungen.

4. Verfahren zur Bestimmung des mittleren Abstandes (v) von mindestens zwei zueinander beabstandten Messeinrichtungen (3) zu einem Leiter (1),

wobei jede Messeinrichtung (3) eine gleiche Anzahl von mindestens zwei Messsystemen (2) aufweist, wobei die Messysteme (2) derselben Messeinrichtung (3) an unterschiedlichen vertikalen Positionen (P[m]) angeordnet sind,
wobei der Leiter (1) von einem elektrischen Strom durchflossen wird, wodurch ein Magnetfeld, aufweisend eine magnetische Flussdichte (B[T]) entsteht, wobei die magnetische Flussdichte eine Horizontalkomponente ($B_H$) und eine Vertikalkomponente ($B_V$) aufweist,
mit den Schritten:

- eine Ermittlung (S1) von Verläufen der Horizontalkomponente ($B_H$) über die Horizontalpositionen (h[m]) durch bezüglich der vertikalen Position (P[m]) korrespondierenden Messsysteme (2),

wobei die Horizontalposition (h[m]) den orthogonalen Abstand der Messeinrichtung (3) zur Längsachse des Leiters (1) parallel zur Erdoberfläche angibt,
wobei die Verläufe der Horizontalkomponente ($B_H$) durch Messung der Horizontalkomponenten ($B_H$) durch die Messsysteme (2) der Messeinrichtungen (3) ermittelt werden und

- eine Ermittlung (S2) der zu den ermittelten Verläufen der Horizontalkomponente ($B_H$) zugehörigen Verläufen der Vertikalkomponenten ($B_V$) über die Horizontalposition (h[m]) der Messeinrichtungen (3), wobei die Verläufe der Vertikalkomponenten ($B_V$) durch Messung der zu den ermittelten Horizontalkomponenten ($B_H$) zugehörigen Vertikalkomponenten ($B_V$) durch die entsprechenden Messsysteme (2() ermittelt werden,
- eine Bestimmung (S3) der Verhältnisse (M) der Verläufe der Vertikalkomponente ($B_V$) zu den Verläufen der Horizontalkomponente ($B_H$) als Funktion über die Horizontalposition (h[m]) der Messeinrichtung (3),
- eine Bestimmung (S4) der Ableitungen der Verhältnisse (M) nach den Horizontalpositionen (h[m]),
- eine Bestimmung (S5) der Kehrwerte der Ableitungen und
- eine Bestimmung (S6) des mittleren Abstandes (T) der Messeinrichtungen (3) zu dem Leiter (1) aus den Kehrwerten der Ableitungen.

5. Verfahren nach Anspruch 3 oder 4,
wobei zur Bestimmung des mittleren Abstandes (v) der Messeinrichtungen (3) zu dem Leiter (1) aus den Kehrwerten der Ableitungen Ausgleichsgeraden zur Berücksichtigung der unterschiedlichen vertikalen Positionen (P[m]) der Messsysteme (2) aufgestellt und einbezogen werden.

6. Verfahren nach einem der vorherigen Ansprüche,
wobei jedes Messsystem (2) drei Spule aufweist, wobei die Spulen orthogonal zueinanderstehen.

7. Verfahren nach Anspruch 6,
wobei die von dem Magnetfeld in den Spulen erzeugte Induktionsspannung gefiltert wird.

8. Verfahren nach Anspruch 7,
wobei zur Filterung ein Bandpassfilter verwendet wird, wobei der Bandpassfilter abhängig von der Frequenz des Stroms des stromdurchflossenen Leiters (1) angepasst wird.

9. Verfahren nach einem der vorhergehenden Ansprüche,
wobei der Leiter (1) Teil einer Pipeline zum Transport von Öl und/ oder Gas ist.

10. Verfahren nach einem der vorhergehenden Ansprüche,
wobei der Leiter (1) Teil eines kathodischen Korrosionsschutzsystems einer Pipeline ist.

11. Verfahren nach einem der vorhergehenden Ansprüche,
wobei der elektrische Strom, von dem der Leiter (1) durchflossen wird, einen Frequenzbereich von 30 Hz bis 2 kHz aufweist.

12. Verfahren nach einem der vorhergehenden Ansprüche,
wobei der elektrische Strom, von dem der Leiter (1) durchflossen wird, eine sinusförmige Charakteristik aufweist.

13. Verfahren nach einem der vorhergehenden Ansprüche,
wobei die Messeinrichtung (3) von einem bemannten oder unbemannten Flugobjekt transportiert wird.

14. Messvorrichtung (3) zur Bestimmung des mittleren Abstandes zwischen der Messvorrichtung (3) und einem stromdurchflossenen Leiter (1), wobei die Messvorrichtung (3) dazu eingerichtet ist in oder an einem Luftfahrzeug angeordnet zu werden, aufweisend:

- mindestens zwei zueinander vertikal angeordnete Messsysteme (2), wobei jedes Messsystem (2) drei Spulen aufweist, wobei die Spulen orthogonal zueinanderstehen,

wobei die Messvorrichtung (3) ausgebildet und programmiert ist, ein Verfahren nach einem der Ansprüche 1 bis 13 auszuführen.

**Claims**

1.  Method for determining the average distance (v) of a measuring device (3) from a conductor (1),

    wherein the measuring device (3) comprises a measuring system (2),
    wherein an electrical current flows through the conductor (1) so that a magnetic field having a magnetic flux density (B[T]) is formed, the magnetic flux density (B[T]) having a horizontal component ($B_H$) and a vertical component ($B_V$),
    having the steps:

    - determining (S1) a profile of the horizontal component ($B_H$) against the horizontal position (h[m]) of the measuring device (3),

        wherein the horizontal position (h[m]) indicates the orthogonal distance of the measuring device (3) from the longitudinal axis of the conductor (1) parallel to the Earth's surface,
        wherein the profile of the horizontal component ($B_H$) is determined by measuring the horizontal components ($B_H$) at at least two different horizontal positions (h[m]) using the measuring system (2) of the measuring device (3), which changes the horizontal position (h[m]), and

    - determining (S2) a profile, associated with the profile that has been determined of the horizontal component ($B_H$), of the vertical component ($B_V$) against the horizontal position (h[m]) of the measuring device (3), wherein the profile of the vertical component ($B_V$) is determined by measuring the vertical components ($B_V$), associated with the horizontal components ($B_H$) that have been determined, using the measuring system (2),
    - determining (S3) the ratio (M) of the profile of the vertical component ($B_V$) to the profile of the horizontal component ($B_H$) as a function of the horizontal position (h[m]) of the measuring device (3),
    - determining (S4) the derivative of the ratio (M) with respect to the horizontal position,
    - determining (S5) the inverse of the derivative, and
    - determining (S6) the average distance (v) of the measuring devices (3) from the conductor (1) from the inverse of the derivative.

2.  Method for determining the average distance (v) of at least two mutually separated measuring devices (3) from a conductor (1),

    wherein each measuring device (3) comprises a measuring system (2),
    wherein an electrical current flows through the conductor (1) so that a magnetic field having a magnetic flux density (B[T]) is formed, the magnetic flux density (B[T]) having a horizontal component ($B_H$) and a vertical component ($B_V$),
    having the steps:

    - determining (S1) a profile of the horizontal component ($B_H$) against the horizontal position (h[m]) of the measuring devices (3),

        wherein the horizontal position (h[m]) indicates the orthogonal distance of the measuring device (3) from the longitudinal axis of the conductor (1) parallel to the Earth's surface,
        wherein the profile of the horizontal component ($B_H$) is determined by measuring the horizontal components ($B_H$) using the measuring systems (2) of the measuring devices (3),

    - determining (S2) the profile, associated with the profile that has been determined of the horizontal component ($B_H$), of the vertical component ($B_V$) against the horizontal position (h[m]) of the measuring devices (3),
    wherein the profile of the vertical component ($B_V$) is determined by measuring the vertical components ($B_V$), associated with the horizontal components ($B_H$) that have been determined, using the corresponding measuring systems (2),
    - determining (S3) the ratio (M) of the profile of the vertical component ($B_V$) to the profile of the horizontal component ($B_H$) as a function of the horizontal position (h[m]) of the measuring devices (3),

- determining (S4) the derivative of the ratio (M) with respect to the horizontal position (h[m]),
- determining (S5) the inverse of the derivative, and
- determining (S6) the average distance (v) of the measuring devices from the conductor from the inverse of the derivative.

3. Method for determining the average distance (v) of a measuring device (3) from a conductor (1),

wherein the measuring device (3) comprises at least two measuring systems (2), the measuring systems (2) being arranged at different vertical positions (P[m]),
wherein an electrical current flows through the conductor (1) so that a magnetic field having a magnetic flux density (B[T]) is formed, the magnetic flux density (B[T]) having a horizontal component ($B_H$) and a vertical component ($B_V$),
having the steps:

- determining (S1) profiles of the horizontal component ($B_H$) against the horizontal position (h[m]) of the measuring systems (2),

wherein the horizontal position (h[m]) indicates the orthogonal distance of the measuring device (3) from the longitudinal axis of the conductor (1) parallel to the Earth's surface,
wherein the profiles of the horizontal component ($B_H$) are determined by measuring the horizontal components ($B_H$) at at least two different horizontal positions (h[m]) using the measuring systems (2) of the measuring device (3), which changes the horizontal position (h[m]), and

- determining (S2) the profiles, associated with the profiles that have been determined of the horizontal component ($B_H$), of the vertical components ($B_V$) against the horizontal position (h[m]) of the measuring device (3),
wherein the profiles of the vertical components ($B_V$) are determined by measuring the vertical components ($B_V$), associated with the horizontal components ($B_H$) that have been determined, using the corresponding measuring systems (2),
- determining (S3) the ratios (M) of the profiles of the vertical component ($B_V$) to the profiles of the horizontal component as a function of the horizontal position ($B_H$) of the measuring device (3),
- determining (S4) the derivatives of the ratios (M) with respect to the horizontal position (h[m]),
- determining (S5) the inverses of the derivatives, and
- determining (S6) the average distance (T) of the measuring devices (3) from the conductor (1) from the inverses of the derivatives.

4. Method for determining the average distance (v) of at least two mutually separated measuring devices (3) from a conductor (1),

wherein each measuring device (3) comprises an equal number of at least two measuring systems (2), the measuring systems (2) of the same measuring device (3) being arranged at different vertical positions (P[m]),
wherein an electrical current flows through the conductor (1) so that a magnetic field having a magnetic flux density (B[T]) is formed, the magnetic flux density having a horizontal component ($B_H$) and a vertical component ($B_V$),
having the steps:

- determining (S1) profiles of the horizontal component ($B_H$) against the horizontal positions (h[m]) using measuring systems (2) that correspond in respect of the vertical position (P[m]),

wherein the horizontal position (h[m]) indicates the orthogonal distance of the measuring device (3) from the longitudinal axis of the conductor (1) parallel to the Earth's surface,
wherein the profiles of the horizontal component ($B_H$) are determined by measuring the horizontal components ($B_H$) using the measuring systems (2) of the measuring devices (3), and

- determining (S2) the profiles, associated with the profiles that have been determined of the horizontal component ($B_H$), of the vertical components ($B_V$) against the horizontal position (h[m]) of the measuring devices (3),
wherein the profiles of the vertical components ($B_V$) are determined by measuring the vertical components

($B_V$), associated with the horizontal components ($B_H$) that have been determined, using the corresponding measuring systems (2),

- determining (S3) the ratios (M) of the profiles of the vertical component ($B_V$) to the profiles of the horizontal component ($B_H$) as a function of the horizontal position (h[m]) of the measuring device (3),

- determining (S4) the derivatives of the ratios (M) with respect to the horizontal positions (h[m]),

- determining (S5) the inverses of the derivatives, and

- determining (S6) the average distance (T) of the measuring devices (3) from the conductor (1) from the inverses of the derivatives.

5. Method according to Claim 3 or 4,
wherein best-fit lines to take into account the different vertical positions (P[m]) of the measuring systems (2) are compiled and included for determining the average distance (v) of the measuring devices (3) from the conductor (1) from the inverses of the derivatives.

6. Method according to one of the preceding claims,
wherein each measuring system (2) comprises three coils, the coils being mutually orthogonal.

7. Method according to Claim 6,
wherein the induction voltage generated in the coils by the magnetic field is filtered.

8. Method according to Claim 7,
wherein a bandpass filter is used for the filtering, the bandpass filter being adapted according to the frequency of the current of the current-carrying conductor (1).

9. Method according to one of the preceding claims,
wherein the conductor (1) is part of a pipeline for transporting oil and/or gas.

10. Method according to one of the preceding claims,
wherein the conductor (1) is part of a cathodic corrosion protection system of a pipeline.

11. Method according to one of the preceding claims,
wherein the electrical current which flows through the conductor (1) has a frequency range of from 30 Hz to 2 kHz.

12. Method according to one of the preceding claims,
wherein the electrical current which flows through the conductor (1) has a sinusoidal characteristic.

13. Method according to one of the preceding claims,
wherein the measuring device (3) is transported by a manned or unmanned flying object.

14. Measuring device (3) for determining the average distance between the measuring device (3) and a conductor (1) through which a current flows, the measuring device (3) being configured to be arranged in or on an aircraft, comprising:

- at least two measuring systems (2) arranged vertically with respect to one another, each measuring system (2) comprising three coils, the coils being mutually orthogonal,

wherein the measuring device (3) is configured and programmed to carry out a method according to one of Claims 1 to 13.

**Revendications**

1. Procédé de détermination de la distance (v) moyenne d'un dispositif (3) de mesure à un conducteur (1),

dans lequel le dispositif (3) de mesure a un système (2) de mesure, dans lequel il passe dans le conducteur (1) un courant électrique, grâce à quoi il est créé un champ magnétique ayant une densité (B[T]) de flux magnétique, dans lequel la densité (B[T]) de flux magnétique a une composante ($B_H$) horizontale et une composante ($B_V$) verticale,

comprenant les stades :

- une détermination (S1) d'une courbe de la composante ($B_H$) horizontale en fonction de la position (h[m]) horizontale du dispositif (3) de mesure,

dans lequel la position (h[m]) horizontale indique la distance orthogonale du dispositif (3) de mesure à l'axe longitudinal du conducteur (1), parallèlement à la surface de la terre,
dans lequel on détermine la courbe de la composante ($B_H$) horizontale, en mesurant les composantes ($B_H$) horizontales en au moins deux positions (h[m]) horizontales différentes par le système (2) de mesure du dispositif (3) de mesure, qui modifie la position (h[m]) horizontale, et

- une détermination (S2) d'une courbe, associée à la courbe déterminée de la composante ($B_H$) horizontale, de la composante ($B_V$) verticale, en fonction de la position (h[m]) horizontale du dispositif (3) de mesure, dans lequel on détermine la courbe de la composante ($B_V$) verticale en mesurant, par le système (2) de mesure, les composantes ($B_V$) verticales associées aux composantes ($B_H$) horizontales déterminées,
- une détermination (S3) du rapport (M) de la courbe de la composante ($B_V$) verticale à la courbe de la composante ($B_H$) horizontale, en fonction de la position (h[m]) horizontale du dispositif (3) de mesure,
- une détermination (S4) de la dérivée du rapport (M) en fonction de la position horizontale,
- une détermination (S5) de l'inverse de la dérivée, et
- une détermination (S6) de la distance (v) moyenne des dispositifs (3) de mesure au conducteur (1) à partir de l'inverse de la dérivée.

2. Procédé de détermination de la distance (v) moyenne à un conducteur (1) d'au moins deux dispositifs (3) de mesure à distance l'un de l'autre,

dans lequel chaque dispositif (3) de mesure a un système (2) de mesure,
dans lequel dans lequel il passe dans le conducteur (1) un courant électrique, grâce à quoi il est créé un champ magnétique ayant une densité (B[T]) de flux magnétique, dans lequel la densité (B[T]) de flux magnétique a une composante ($B_H$) horizontale et une composante ($B_V$) verticale,
comprenant les stades :

- une détermination (S1) d'une courbe de la composante ($B_H$) horizontale en fonction de la position (h[m]) horizontale des dispositifs (3) de mesure,

dans lequel la position (h[m]) horizontale indique la distance orthogonale du dispositif (3) de mesure à l'axe longitudinal du conducteur (1), parallèlement à la surface de la terre,
dans lequel on détermine la courbe de la composante ($B_H$) horizontale en mesurant les composantes ($B_H$) horizontales par les systèmes (2) de mesure des dispositifs (3) de mesure,

- une détermination (S2) d'une courbe, associée à la courbe déterminée de la composante ($B_H$) horizontale, de la composante ($B_V$) verticale, en fonction de la position (h[m]) horizontale des dispositifs (3) de mesure, dans lequel on détermine la courbe de la composante ($B_V$) verticale, en mesurant par les systèmes (2) de mesure correspondants les composantes ($B_V$) verticales associées aux composantes ($B_H$) horizontales déterminées,
- une détermination (S3) du rapport (M) de la courbe de la composante ($B_V$) verticale à la courbe de la composante ($B_H$) horizontale en fonction de la position (h[m]) horizontale des dispositifs (3) de mesure,
- une détermination (S4) de la dérivée du rapport (M) en fonction de la position (h[m]) horizontale,
- une détermination (S5) de l'inverse de la dérivée, et
- une détermination (S6) de la distance (v) moyenne des dispositifs de mesure au conducteur à partir de l'inverse de la dérivée.

3. Procédé de détermination de la distance (v) moyenne d'un dispositif (3) de mesure à un conducteur (1),

dans lequel le dispositif (3) de mesure a au moins deux systèmes (2) de mesure, dans lequel les systèmes (2) de mesure sont disposés en des positions (P[m]) verticales différentes,
dans lequel il passe dans le conducteur (1) un courant électrique, grâce auquel il est créé un champ magnétique ayant une densité (B[T]) de flux magnétique, dans lequel la densité (B[T]) de flux magnétique a une composante ($B_H$) horizontale et une composante ($B_V$) verticale,

comprenant les stades :

- une détermination (S1) de courbes de la composante ($B_H$) horizontale en fonction de la position (h[m]) horizontale des systèmes (2) de mesure,

dans lequel la position (h[m]] horizontale indique la distance orthogonale du dispositif (3) de mesure à l'axe longitudinal du conducteur (1), parallèlement à la surface de la terre,
dans lequel on détermine les courbes de la composante ($B_H$) horizontale en mesurant les composantes ($B_H$) horizontales en au moins deux positions (h[m]) horizontales différentes par les systèmes (2) de mesure du dispositif (3) de mesure, lequel modifie la position (h[m]) horizontale, et

- une détermination (S2) des courbes, associées aux courbes déterminées de la composante ($B_H$) horizontale, des composantes ($B_V$) verticales en fonction de la position (h[m]) horizontale du dispositif (3) de mesure,
dans lequel on détermine les courbes des composantes ($B_V$) verticales, en mesurant par les systèmes (2) de mesure correspondants les composantes ($B_V$) verticales associées aux composantes ($B_H$) horizontales déterminées,
- une détermination (S3) des rapports (M) des courbes des composantes ($B_V$) verticales aux courbes des composantes horizontales, en fonction de la position ($B_H$) horizontale du dispositif (3) de mesure,
- une détermination (S4) des dérivées des rapports (M) en fonction de la position (h[m]) horizontale,
- une détermination (S5) des inverses des dérivées,
- une détermination (S6) de la distance (T) moyenne des dispositifs (3) de mesure au conducteur (1) à partir des inverses des dérivées.

4. Procédé de détermination de la distance (v) moyenne à un conducteur (1) d'au moins deux dispositifs (3) de mesure à distance l' un de l'autre,

dans lequel chaque dispositif (3) de mesure a un même nombre d'au moins deux systèmes (2) de mesure,
dans lequel les systèmes (2) de mesure du même dispositif (3) de mesure sont disposés en des positions (P[m]) verticales différentes,
dans lequel il passe dans le conducteur (1) un courant électrique, grâce auquel il est produit un champ magnétique ayant une densité (B[T]) de flux magnétique, dans lequel la densité de flux magnétique a une composante ($B_H$) horizontale et une composante ($B_V$) verticale,
comprenant les stades :

- une détermination (S1) de courbes de la composante ($B_H$) horizontale en fonction des positions (h[m]) horizontales par des systèmes (2) de mesure correspondants en ce qui concerne la position (P[m]) verticale,

dans lequel la position (h[m]) horizontale indique la distance orthogonale du dispositif (3) de mesure à l'axe longitudinal du conducteur (1), parallèlement à la surface de la terre,
dans lequel on détermine les courbes de la composante ($B_H$) horizontale en mesurant les composantes ($B_H$) horizontales par les systèmes (2) de mesure des dispositifs (3) de mesure, et

- une détermination (S2) des courbes, associées aux courbes déterminées de la composante ($B_H$) horizontale, des composantes ($B_V$) verticales en fonction de la position (h[m]) horizontale des dispositifs (3) de mesure,
dans lequel on détermine les courbes des composantes ($B_V$) verticales en mesurant, par les systèmes (2) de mesure correspondants, les composantes ($B_V$) verticales associées aux composantes ($B_H$) horizontales déterminées,
- une détermination (S3) des rapports (M) des courbes des composantes ($B_V$) verticales aux courbes des composantes ($B_H$) horizontales en fonction de la position (h[m]) horizontale du dispositif (3) de mesure,
- une détermination (S4) des dérivées des rapports (M) en fonction des positions (h[m]) horizontales,
- une détermination (S5) des inverses des dérivées,
- une détermination (S6) de la distance (T) moyenne des dispositifs (3) de mesure au conducteur (1) à partir des inverses des dérivées.

5. Procédé suivant la revendication 3 ou 4,
dans lequel, pour la détermination de la distance (v) moyenne des dispositifs (3) de mesure au conducteur (1) à partir des inverses des dérivées, on trace et on inclut des droites de compensation pour la prise en compte des positions (P[m]) verticales différentes des systèmes (2) de mesure.

6. Procédé suivant l'une des revendications précédentes,
dans lequel chaque système (2) de mesure a trois bobines, dans lequel les bobines sont orthogonales entre elles.

7. Procédé suivant la revendication 6,
dans lequel on filtre la tension d'induction produite par le champ magnétique dans les bobines.

8. Procédé suivant la revendication 7,
dans lequel on utilise, pour le filtrage, un filtre passe bande, dans lequel on adapte le filtre passe bande en fonction de la fréquence du courant, qui passe dans le conducteur (1).

9. Procédé suivant l'une des revendications précédentes,
dans lequel le conducteur (1) est une partie d'un oléoduc de transport de pétrole et/ou de gaz.

10. Procédé suivant l'une des revendications précédentes,
dans lequel le conducteur (1) est une partie d'un système cathodique de protection vis-à-vis de la corrosion d'un oléoduc.

11. Procédé suivant l'une des revendications précédentes,
dans lequel le courant électrique, qui passe dans le conducteur a une plage de fréquences de 30 Hz à 2 kHz.

12. Procédé suivant l'une des revendications précédentes,
dans lequel le courant électrique, qui passe dans le conducteur (1), a une caractéristique sinusoïdale.

13. Procédé suivant l'une des revendications précédentes,
dans lequel on transporte le dispositif (3) de mesure par un objet volant habité ou inhabité.

14. Dispositif (3) de mesure pour la détermination de la distance moyenne entre le dispositif (3) de mesure et un conducteur (1), dans lequel passe du courant, dans lequel le dispositif (3) de mesure est agencé pour être disposé dans ou sur un aéronef, comportant :

- au moins deux systèmes (2) de mesure disposés verticalement l'un par rapport à l'autre, dans lequel chaque système (2) de mesure a trois bobines, dans lequel les trois bobines sont orthogonales entre elles,

dans lequel le dispositif (3) de mesure est constitué et programmé pour effectuer un procédé suivant l'une des revendications 1 à 13.

## FIG 1

| S1 |
|---|

| S2 |
|---|

| S3 |
|---|

| S4 |
|---|

| S5 |
|---|

| S6 |
|---|

## FIG 2

FIG 3

FIG 4

FIG 5

EP 3 969 839 B1

FIG 6

FIG 7

EP 3 969 839 B1

FIG 9

EP 3 969 839 B1

FIG 10

**IN DER BESCHREIBUNG AUFGEFÜHRTE DOKUMENTE**

**In der Beschreibung aufgeführte Patentdokumente**

- US 2018172866 A1
- RU 2510500 C1
- EP 3228980 A
- DE 19846428 A1
- WO 2014163536 A1
- RU 2504762 C1
- RU 2630856 C1

**In der Beschreibung aufgeführte Nicht-Patentliteratur**

- TILT-DEPTH METHOD: A SIMPLE DEPTH ESTIMATION METHOD USING FIRST-ORDER MAGNETIC DERIVATIVES. *THE LEADING EDGE, SOCIETY OF EXPLORATION GEOPHYSICISTS, US,* 01. Dezember 2007, vol. 26 (12), ISSN 1070-485X, 1502-1505